# EUROPÄISCHE PATENTSCHRIFT

(11) **EP 4 046 727 B1**
(45) Veröffentlichungstag und Bekanntmachung des Hinweises auf die Patenterteilung: **10.01.2024**
(21) Anmeldenummer: 21206171.7
(22) Anmeldetag: 03.11.2021
(51) Int. Cl.: B22C 9/10, B22D 15/02, H02K 5/20, H02K 15/14

(54) **VERFAHREN ZUM HERSTELLEN EINES GUSSTEILS UND ELEKTROMOTOR**
METHOD OF PRODUCING A CAST PART AND ELECTRIC MOTOR
PROCÉDÉ DE FABRICATION D'UNE PIÈCE COULÉE ET MOTEUR ÉLECTRIQUE

(30) Priorität: 19.02.2021 DE 102021104024
(43) Veröffentlichungstag der Anmeldung: 24.08.2022
(73) Patentinhaber: ae group ag, 99834 Gerstungen (DE)
(72) Erfinder:
(74) Vertreter: Gramm, Lins & Partner Patent- und Rechtsanwälte PartGmbB

(56) Entgegenhaltungen:
- DE-A1-102010 054 496
- DE-A1-102012 022 331
- DE-A1-102013 015 395
- DE-B3-102013 101 942
- DE-B3-102019 112 918
- KR-B1- 101 761 677
- KR-B1- 101 961 155
- KR-B1- 102 055 746
- DINGER PETER ET AL: "Stabile Einlegerohre für Giessereien", GIESSEREI, vol. 02, 7 February 2012 (2012-02-07), pages 22-27, XP093019025,
- MÖLLER ET AL: "Giesskerne für den Druckguss und andere Giessverfahren", DER STAHLFORMEN-BAUER, vol. 2, 1 March 2020 (2020-03-01), pages 10-11, XP093019033,
- RUPP SUSANNE ET AL: "Combicore-Giesskerne für den Druckguss", GIESSEREI-ERFAHRUNGSAUSTAUSCH, vol. 2, 1 March 2013 (2013-03-01), pages 6-8, XP093019042,

## Beschreibung

Die Erfindung betrifft ein Verfahren zum Herstellen eines Gehäuses. Gemäß einem zweiten Aspekt betrifft die Erfindung eine Gussteilherstellanlage zum Herstellen eines solchen Gehäuses.

Derartige Elektromotoren werden beispielsweise in Elektrofahrzeugen verwendet. Um die unvermeidliche Abwärme abzuführen, ist im Gehäuse des Elektromotors zumindest ein Kühlkanal vorgesehen, durch den ein Kühlfluid, oft Wasser oder eine wässrige Lösung oder aber Öl, geleitet wird.

Es ist bekannt, dieses Gehäuse zweiteilig aus einem Innenteil und einem Außenteil herzustellen, das das Innenteil umgibt. In diesem Fall wird auf die Außenseite des Innenteils eine Nut aufgebracht, die mit der Innenseite des Außenteils zusammenwirkt und den Kühlkanal bildet. Nachteilig hieran ist, dass hohe Anforderungen an die Formhaltigkeit der beiden Gehäusehälften gestellt werden. Formhaltigkeit, Qualität und Art der Verbindung beider Bauteile sind maßgebend für die Dichtheit der Baugruppe entscheidend. Anderenfalls kann es zu einer Leckage von Kühlmedium kommen, was die Betriebssicherheit des Motors gefährden kann.

Es ist zudem bekannt, eine Rohrleitung, die beispielsweise durch Hochdruck-Innenumformen zwischen zwei Aluminiumblechen hergestellt wurde, zu umgießen. Damit diese Rohrleitung der mechanischen Belastung beim Umgießen, bei dem es sich in der Regel um ein Spritzgießen handelt, stand zu halten, enthält die Rohrleitung oft ein Stützmaterial, in der Regel Salz, das nachher ausgewaschen wird. Es hat sich jedoch herausgestellt, dass der Wärmeübergang in das Kühlfluid in vielen Fällen nicht so hoch ist wie erwartet.

Aus der EP 3 208 013 A1 ist ein Verfahren zum Gießen eines Bauteils mit einer komplexen Geometrie bekannt. Bei diesem Verfahren wird eine Gießform eingesetzt, von der zumindest ein Formteil als verlorene Form aus Salz aufgebaut ist. Ein äußerer Teil der Gießform, durch den die äußere Geometrie des Bauteils festgelegt wird, oder ein innerer Teil der Gießform, die die innere Geometrie des Bauteils festlegt, ist aus zumindest zwei Segmenten zusammengesetzt. Auf diese Weise lassen sich auch komplexe Bauteile, wie beispielsweise eine Spule, mit einer glatten Oberfläche durch Gießen herstellen,

Die EP 1 293 276 A2 beschreibt eine Vorrichtung zur Herstellung eines Druckgussbauteils, das ein Einlegeteil aufweist, unter Verwendung eines Salzkerns. Das Einlegeteil stützt den Kern beim Gießen. Zwischen dem Einlegeteil und dem Kern besteht eine Verbindung, die dicht bezüglich des Gießmetalls ist.

In der EP 2 647 451 A1 ist ein Verfahren zum Herstellen eines Salzkerns mittels Warmkammer-Druckguss beschrieben. Durch dieses Druckguss-Verfahren werden Anhaftungen der Salzschmelze an den Dosiereinrichtungskomponenten vermieden.

Aus der DE 10 2014 007 889 A1 ist ein Verfahren zur Herstellung eines für den Einsatz beim Druckguss geeigneten Salzkörpers bekannt. Bei diesem Verfahren wird zunächst ein Modell für den Salzkörper aus einem Polymerschaum hergestellt. Dieses Modell wird mithilfe eines Formstoffes in einen Formenkasten eingeformt und mit der Salzschmelze abgegossen. Dabei zersetzt sich der Polymerschaum.

Die DE 10 2012 022 331 A1 beschreibt ein Verfahren zur Herstellung eines Salzkerns zur Verwendung im Aluminium-Druckguss. Dazu wird die entsprechende Salzmischung erhitzt, sodass eine halbfeste Salzpaste gebildet wird, die mittels eines Extruders in eine Kernform eingespritzt wird. Danach wird der Salzkern entformt.

Die DE 10 2019 112 918 B3 beschreibt einen Kern zur Herstellung eines Kurbelgehäuses eines Zylindermotors. Mehrere Einzelteile des Kerns werden zusammengefügt und danach an einer Stützstruktur befestigt. Nachteilig an einem solchen Verfahren ist die Bruchgefahr von filigranen Kernteilen.

Aus der DE 10 2010 054 496 A1 ist ein Verfahren zum Gießen eines Gehäuses eines Elektromotors bekannt, bei dem ein komplex geformter Salz- und/oder

Sandkern verwendet wird, um Kühlkanäle auszubilden. Die Druckschrift enthält keine Angaben über die Herstellung des Kerns.

Die DE 10 2013101 942 B3 beschreibt ein Verfahren zum Herstellen eines Kerns für den Guss eines Zylinderkurbelgehäuses eines Zylindermotors. Der Kern wird aus einzelnen individuell geschlossenen Kernteilen zusammengefügt oder einstückig mittels Kernschießen hergestellt. Problematisch bei solchen Verfahren kann der Bruch von dünnen Teilen des Kerns sein.

Die DE 10 2013 015 395 A1 beschreibt ein Verfahren zum Gießen eines Kerns aus einer Mischung aus Salz und Metall. Nach dem Umguss wird das Metall herausgelöst, sodass ein poröser Kühlkanal verbleibt.

Der Erfindung liegt die Aufgabe zugrunde, Nachteile im Stand der Technik zu vermindern.

Die Erfindung löst das Problem durch ein Verfahren mit den Merkmalen von Anspruch 1.

Gemäß einem zweiten Aspekt löst die Erfindung das Problem durch eine Gussteilherstellanlage mit den Merkmalen von Anspruch 11.

Vorteilhaft an der Erfindung ist, dass die Wärme, die an einem Teil des Gehäuses eingeleitet wird, beispielsweise von einem Stator, durch thermische Leitung des Gussmaterials, also des Materials, aus dem das Gussteil gegossen wurde, bis zum Kühlkanal geleitet wird. Insbesondere muss dazu keine Übergangsstelle zwischen dem Gussmaterial und einem den Kanal umgebenden, eingegossenen Einlegeteil überwunden werden.

Vorteilhaft an der Erfindung ist, dass das Gehäuse oder das Gehäuseteil nicht durch Fügen zweier Teil-Gehäuse oder Teil-Gehäuseteile hergestellt werden muss, sondern meist in einem Gießvorgang hergestellt werden kann. Der Herstellungsvorgang ist daher in der Regel weniger komplex.

Im Rahmen der vorliegenden Beschreibung umfasst die Metallschmelze vorzugsweise Aluminium, Zink, Magnesium oder eine Legierung zumindest einer dieser Metalle. Vereinfachend wird im Folgenden statt von der Metallschmelze auch von flüssigem Metall gesprochen. Die Metallschmelze kann nicht-metallische Bestandteile enthalten, beispielsweise Fasern oder Partikel.

Unter einem Salzformteil wird insbesondere ein dreidimensionales Objekt verstanden, das Salz, insbesondere eine Salzmischung, enthält und mittels Wasser so destabilisierbar ist, dass es aus dem Rohling entfernbar ist. Das Salzformteil kann auch als Salzkern bezeichnet werden. Das Salzformteil ist vorzugsweise zu zumindest 20 Gewichtsprozent, insbesondere zumindest 30 Gewichtsprozent, besonders bevorzugt zu zumindest 50 Gewichtsprozenten, aus Salz oder einer Salzmischung aufgebaut. Das Salzformteil kann ein körniges Material enthalten, beispielsweise ein Granulat aus anorganischem Material, insbesondere Sand, das ist aber nicht notwendig.

Das Salzformteil ist meist spröde. Es wurde daher erwartet, dass dieses Salzbauteil keine hinreichend große Festigkeit hat, um im Druckguss umgossen und gehandhabt zu werden. Es hat sich jedoch überraschend herausgestellt, dass dies sehr wohl möglich ist, insbesondere, wenn ein Stützkörper verwendet wird.

Vorzugsweise wird das Umgießen so durchgeführt, dass das Salzformteil mit der Metallschmelze direkt in Kontakt kommt. Die Metallschmelze ist das Gussmaterial.

Vorzugsweise handelt es sich bei dem Umgießen um ein Druckgießen. Insbesondere erfolgt das Umgießen bei einem maximalen Druck von zumindest 15 MPa (150 bar). Dieser maximale Druck liegt vorzugsweise nicht ständig während des Umgießens an, sondern insbesondere nach erfolgter Formfüllung.

Es ist möglich, nicht aber notwendig, dass das Metall im strengen Sinne flüssig ist. Maßgeblich ist lediglich, dass das Metall fließfähig ist. Auch pastöses oder teigiges Metall wird daher als flüssiges Metall betrachtet.

Günstig ist es, wenn das Gussteil ein Gehäuse oder Gehäuseteil eines Elektromotors oder Generators ist. Erfindungsgemäß ist daher auch ein Verfahren zum Herstellen eines Gehäuse oder Gehäuseteils, insbesondere eines Elektromotors oder Generators. Das Gussteil kann aber beispielsweise auch ein Gehäuse eines anderen Aggregats sein.

Günstig ist es, wenn das Salzformteil zumindest abschnittsweise gekrümmt, insbesondere kreisabschnittförmig gekrümmt ist. Insbesondere kann das Salzformteil zumindest abschnittsweise spiralförmig ausgebildet sein.

Es hat sich herausgestellt, dass die Prozesssicherheit beim Herstellen des Gussteils erhöht werden kann, wenn das Salzformteil - wie gemäß einer bevorzugten Ausführungsform vorgesehen - beim Einlegen in die Gussform, in der das Salzformteil umgossen wird, mittels eines Stützkörpers gestützt wird.

Besonders günstig ist es, dass das Salzformteil beim Umgießen mittels eines Stützkörpers gestützt wird.

Das Material des Stützkörpers ist vorzugsweise ein Metall, insbesondere Aluminium, Kupfer, Zink, Stahl oder eine Legierung eines der Metalle. Günstig ist es, wenn der Stützkörper ein stranggepresstes Bauteil ist. Vorzugsweise besteht der Stützkörper aus einem Material, dessen Schmelzpunkt - vorzugsweise um zumindest 5 Kelvin, insbesondere um zumindest 10 Kelvin, besonders bevorzugt zumindest 15 Kelvin - oberhalb der Temperatur liegt, mit der das Metall an den Stützkörper angegossen wird. Vorzugsweise besteht der Stützkörper aus einem Material, dessen Schmelzpunkt - vorzugsweise um zumindest 5 Kelvin, insbesondere um zumindest 10 Kelvin, besonders bevorzugt zumindest 15 Kelvin - oberhalb der Schmelztemperatur des Metalls liegt, mit dem der Stützkörper umgossen wird.

Vorzugsweise besteht der Stützkörper aus einem Material, dessen Schmelzpunkt - vorzugsweise um zumindest 5 Kelvin, insbesondere um zumindest 10 Kelvin, besonders bevorzugt zumindest 15 Kelvin - oberhalb der Schmelztemperatur der Schmelze des Salzes oder der Salzmischung liegt.

Vorzugsweise der Stützkörper während des Umgießens gekühlt.

Vorzugsweise ist das Einbringen ein Gießen von flüssigem Salz oder einer flüssigen Salzmischung in eine Salzformteil-Gussform ist.

Alternativ erfolgt das Einbringen von Salz oder der Salzmischung in die Salzformteil-Form mittels Kernschießen. Beim Kernschießen wird eine Mischung aus Salzpulver oder einer Salzpulvermischung, die vorzugsweise Wasserglas enthält, in die Salzformteil-Form unter Druck eingeblasen, sodass sich der Stützkörper ausbildet.

Vorzugsweise erfolgt das Stützen des Salzformteils beim Umgießen so, dass das Salzformteil beim Umgießen zumindest abschnittsweise am Stützkörper anliegt und/oder auf dem Stützkörper aufliegt. Wenn das Salzformteil abschnittsweise spiralförmig ausgebildet ist, hat der Stützkörper vorzugsweise zumindest abschnittsweise eine zylindermantelförmige Außenfläche, an der der Stützkörper anliegt. Auf diese Weise kann der Stützkörper radial einwärts wirkende Kräfte auf das Salzformteil aufnehmen. Radial einwärts bezieht sich auf die Längsachse der Zylinderachse des zylinderförmigen Abschnitts.

Das Umgießen erfolgt vorzugsweise so, dass die erstarrende Metallschmelze mit dem Stützkörper einen Stoff-, Kraft- und/oder Formschluss ausbildet. In anderen Worten ist das Umgießen des Salzformteils vorzugsweise zudem ein Angießen des Stützkörpers, insbesondere ein Angießen an einer Außenseite des Stützkörpers. Günstig ist es, wenn der Stützkörper aus einem Material besteht, das zu zumindest 50 % aus Eisen besteht. Günstig ist es, insbesondere in diesem Fall, wenn der Stützkörper auf seiner Außenseite eine Beschichtung aufweist, vorzugsweise eine Nickelbeschichtung. Diese Beschichtung erleichtert das Ausbilden eines Stoffschlusses zwischen dem Stützkörper und dem Umguss.

Günstig ist es, wenn das Verfahren den Schritt des Profilierens und/oder Aufrauens einer Außenoberfläche des Stützkörpers aufweist. Unter einem Aufrauen wird insbesondere jede Bearbeitung verstanden, die den Mittenrauwert nach DIN EN ISO 4287:2010 um zumindest 1 µm, vorzugsweise zumindest 2 µm erhöht und/oder den Mittenrauwert zumindest verdoppelt, vorzugsweise zumindest verdreifacht.

Das Profilieren und/oder Aufrauen erfolgt vorzugsweise durch Laser-Oberflächenbearbeitung und/oder mittels spanender Fertigung, insbesondere durch Spanen mit geometrisch bestimmter Schneide.

Vorzugsweise erfolgt das Umgießen in einer Gussform, insbesondere einer Spritzgussform. Günstig ist es, wenn die Gussform vor dem Umgießen evakuiert wird. Das ist aber nicht notwendig. Es ist auch möglich, dass das Umgießen beispielsweise an einer nicht-evakuierten Gussform erfolgt. Alternativ kann das Umgießen im Schwerkraftguss erfolgen.

Die Gussform kann eine verlorene Gussform sein, in der Regel ist es aber günstiger, wenn es sich um eine wiederverwendbare Gussform handelt, insbesondere eine Metallgussform.

Vorzugsweise hat der Stützkörper zumindest abschnittsweise, insbesondere über mehr als 50% seiner Länge entlang einer Längsachse eines Innen-Schmiegezylinders, eine zylinderförmige oder kegelstumpfförmige Mantelfläche. Günstig ist es, wenn der Stützkörper zumindest abschnittsweise rohrförmig ist. Das Salzformteil umgibt den Stützkörper dann zumindest abschnittsweise spiralförmig.

Vorzugsweise entsteht durch das Herauslösen des Salzformteils aus dem Rohling ein Kühlkanal. Ein Kühlkanal ist insbesondere ein Kanal, der zum Kühlen des Gussteils, insbesondere des Gehäuses, insbesondere mittels Wasser, geeignet ist. Dazu ist der Kühlkanal insbesondere durchgängig, das heißt, dass er von einem Kühlfluid von einem Einlass zu einem Auslass kontinuierlich durchfließbar ist. Vorzugsweise ist der Kühlkanal so ausgebildet, dass eine Projektion des Kühlkanals auf die Innenoberfläche des Stützkörpers zumindest ein Zehntel, insbesondere zumindest ein Achtel, bevorzugt zumindest ein Sechstel, besonders bevorzugt zumindest ein Viertel, der Innenoberfläche beträgt. Alternativ oder zusätzlich ist vorzugsweise das Salzformteil so ausgebildet, dass eine Projektion des Salzformteils auf die Innenoberfläche des Stützkörpers zumindest ein Zehntel, insbesondere zumindest ein Achtel, bevorzugt zumindest ein Sechstel, besonders bevorzugt zumindest ein Viertel, der Innenoberfläche beträgt.

Der Salzanteil des Salzformteils besteht vorzugsweise aus einer Salzmischung, die zumindest zwei unterschiedliche Salze enthält. Günstig ist es, wenn zumindest eines der Salze ein Chlorid ist, insbesondere ein Alkalimetallchlorid. Das andere Salz ist vorzugsweise ein Carbonat, beispielsweise ein Erdalkalicarbonat, oder ein Sulfat. Besonders günstig ist es, wenn der Salzanteil des Salzformteils zu zumindest 60%, insbesondere zumindest 80%, aus Alkalimetallchlorid, insbesondere Kaliumchlorid, und Natriumkarbonat besteht. Besonders günstig ist es, wenn der Salzanteil des Salzformteils zu zumindest 60%, insbesondere zumindest 80%, aus Natriumchlorid besteht.

Günstig ist es, wenn die Salzmischung so gewählt ist, dass eine Biegefestigkeit eines Probekörpers, der aus der Salzmischung gegossen wurde und die Abmessungen 45 cm x 4 cm x 3 cm hat, in einem Dreipunktbiegeversuch nach DIN EN 843-1 zumindest 10 MPa beträgt.

Vorzugsweise umfasst das Verfahren den Schritt des Herstellens des Salzformteils durch Gießen, insbesondere Schwerkraftguss, Niederdruckguss oder auch in einem speziellen Druckgießverfahren. Beispielsweise umfasst das Verfahren die Schritte (a) Herstellen einer Salzformteil-Gussform, insbesondere einer Dauergussform, (b) Gießen von flüssigem Salz oder einer flüssigen Salzmischung in die Salzformteil-Gussform und (c) Entformen des Salzformteils.

Alternativ ist es auch möglich, dass das Salzformteil durch eine andere Gussart hergestellt wird, beispielsweise Niederdruck-Kokillenguss, Druckguss nach dem Warmkammerverfahren oder mittels verlorener Form.

Die Salzformteil-Gussform enthält eine Negativstruktur des Salzformteils und umgibt den Stützkörper. Die Negativstruktur grenzt dann an den Stützkörper an, sodass das flüssige Salz oder die flüssige Salzmischung in Kontakt mit dem Stützkörper kommt. Dadurch grenzt im späteren Gussteil der Kanal direkt an den Stützkörper an. Das bewirkt einen kleinen Wärmeübergangswiderstand in den Kanal bzw. in das Fluid im Kanal.

Vorzugsweise umfasst das Verfahren den Schritt eines Positionierens eines Statorteils relativ zum Stützkörper. Das ist insbesondere ein Montieren des Statorteils am Stützkörper. Günstig ist es, wenn danach der Stützkörper mit dem flüssigen Metall umgossen wird, sodass sich eine drehfeste Verbindung zwischen dem Statorteil und einem Umguss, der durch das Erstarren des flüssigen Metalls entsteht, ausbildet. Der Umguss ist diejenige Metallstruktur, die entsteht, wenn das flüssige Metall erstarrt.

Unter dem Statorteil wird entweder ein Bestandteil eines Stators eines Elektromotors oder der Stator selbst verstanden.

Gemäß einer bevorzugten Ausführungsform wird eine Gussform mit Einfallkern verwendet. Der Einfallkern kommt vorzugsweise zum Einsatz, wenn kein Stator im Stützrohr montiert ist, oder um Bereiche abzustützen, in denen kein Teil das Stators am Rohr innen anliegt. Günstig ist es, wenn der Einfallkern den Stützkörper von innen stützt. So wird der Stützkörper gegen Deformation durch den Spritzdruck geschützt. Unter einem Einfallkern, der auch Faltkern genannt werden kann, wird ein Kern verstanden, der in einen ersten, expandierten Zustand, in dem der Faltkern von innen am Stützkörper anliegt, und in einen kollabierten Zustand, in dem der Faltkern nicht von innen am Stützkörper anliegt und aus dem Stützkörper entnommen werden kann, bringbar ist.

Vorzugsweise umfasst das Verfahren die Schritte des Einbringens eines Rotors in das Gehäuse, insbesondere so, dass der Stützkörper den Rotor in radialer Richtung (teilweise oder vollständig) umgibt. In anderen Worten wird der Rotor vorzugsweise so positioniert, dass er zumindest abschnittsweise in radialer Richtung vom Stützkörper umgeben wird.

Das Verfahren umfasst vorzugsweise zudem den Schritt des Verbindens des Kanals mit einem ersten Anschluss und einem zweiten Anschluss. Der erste Anschluss und der zweite Anschluss sind am Gussteil ausgebildet, vorzugsweise außen am Gussteil. Das Verbinden erfolgt vorzugsweise so, dass ein Fluid, insbesondere eine Flüssigkeit, beispielsweise Wasser, durch den ersten Anschluss in den Kanal leitbar ist und mittels des zweiten Anschlusses wieder aus dem Kanal herausleitbar ist. Auf diese Weise kann der Kanal als Kühlkanal genutzt werden. Insbesondere wird so ein flüssigkeitsgekühlter Elektromotor oder Generator erhalten.

Günstig ist es zudem, wenn zudem der zumindest eine elektrische Leiter des Stators mit einem Anschluss auf der Außenseite des Gussteils kontaktiert wird. Vorzugsweise umfasst das Verfahren zudem den Schritt des Fertigstellens des Elektromotors.

Bei dem Elektromotor kann es sich um einen Synchronmotor, einen Asynchronmotor oder eine Reluktanzmotor oder eine Kombination aus Synchron- und Reluktanzmotor handeln.

Günstig ist es, wenn der Kühlkanal des Elektromotors oder Generators nicht durch ein eingegossenes Rohr begrenzt wird. Nach dem Herauslösen des Salzformteils ist der Kühlkanal dann vollständig fluidgefüllt, insbesondere gasgefüllt.

Günstig ist es, wenn der Kanal einen nicht-runden Querschnitt hat. Unter einem nicht-runden Querschnitt wird insbesondere verstanden, dass eine maximale Abweichung des Querschnitts vom Innenkreis, also dem Kreis maximalen Durchmessers, der innerhalb des Querschnitts angeordnet ist, zumindest 5%, insbesondere zumindest 10%, des Innenkreisdurchmessers beträgt. Günstig ist es, wenn der Kanal über zumindest 50% seiner Längserstreckung einen nicht-runden Querschnitt hat. Insbesondere ist der Querschnitt vorzugsweise eckig, beispielsweise rechteckig.

Alternativ oder zusätzlich ist es günstig, wenn der Kanal einen flachen Querschnitt hat. Unter einem flachen Querschnitt wird verstanden, dass eine maximale Ausdehnung des Querschnitts, die in eine so definierte erste Raumrichtung verläuft, zumindest das 1,5-fache, insbesondere zumindest dem Doppelten der Ausdehnung senkrecht dazu entspricht.

Alternativ oder zusätzlich ist es günstig, wenn der Querschnitt eine Randlänge hat, die zumindest 10%, insbesondere zumindest 20%, größer ist als die Randlänge eines Querschnitts eines flächeninhaltsgleichen Kreises. Auf diese Weise wird der Wärmeübergang aus dem Gussteil in das Fluid im Kanal verbessert. Es ist möglich, nicht aber notwendig, dass der Querschnitt zumindest einen konkaven Abschnitt besitzt. Dies führt ebenfalls zu einer Oberflächenvergrößerung.

Vorzugsweise besitzt die Gussteilherstellanlage eine erste Handhabungsvorrichtung zum Bewegen des Vor-Rohlings zur Spritzgussmaschine und/oder eine Handhabungsvorrichtung zum Bewegen des Rohlings zur Salzformteilentfernvorrichtung. Die Handhabungsvorrichtungen sind beispielsweise Roboter.

Günstig ist es, wenn die Spritzgussmaschine eine Spritzgussform aufweist, die beim Betrieb den Stützkörper umgibt. Vorzugsweise besitzt die Salzformteil-Herstellmaschine eine Kühlvorrichtung zum Kühlen des Stützkörpers. Auf diese Weise können, was eine bevorzugte Ausführungsform der Erfindung darstellt, Stützkörper aus einem Material verwendet werden, deren Schmelzpunkt nicht oberhalb der Temperatur des flüssigen Salzes oder der flüssigen Salzmischung liegt.

Im Folgenden wird die Erfindung anhand der beigefügten Zeichnungen näher erläutert. Dabei zeigt
- Figur 1a: ein erfindungsgemäßes Gussteil, das mittels eines erfindungsgemäßen Verfahrens hergestellt wurde, in einer perspektivischen Ansicht,
- Figur 1b: eine perspektivische Ansicht eines Salzformteils, das im Rahmen des erfindungsgemäßen Verfahrens verwendet wird,
- Figur 2a: eine Draufsicht auf das Salzformteil gemäß Figur 1b, das in einer Spritzgussform angeordnet ist und einen rechteckigen Querschnitt hat,
- Figur 2b: ein Querschnitt durch ein fertiges Gussteil gemäß einer alternativen Ausführungsform, bei dem der Kühlkanal einen runden Querschnitt hat,
- Figur 3a: einen Querschnitt durch einen Kanal eines erfindungsgemäßen Gussteils für einen erfindungsgemäßen Elektromotors und
- Figur 3b: einen Querschnitt durch einen Kanal eines erfindungsgemäßen Gussteils für einen Elektromotors gemäß einer zweiten Ausführungsform.

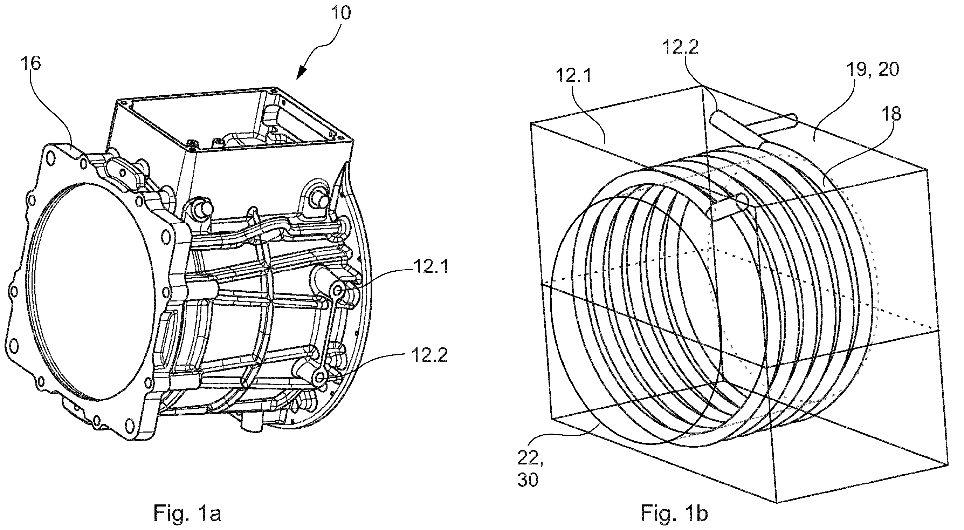

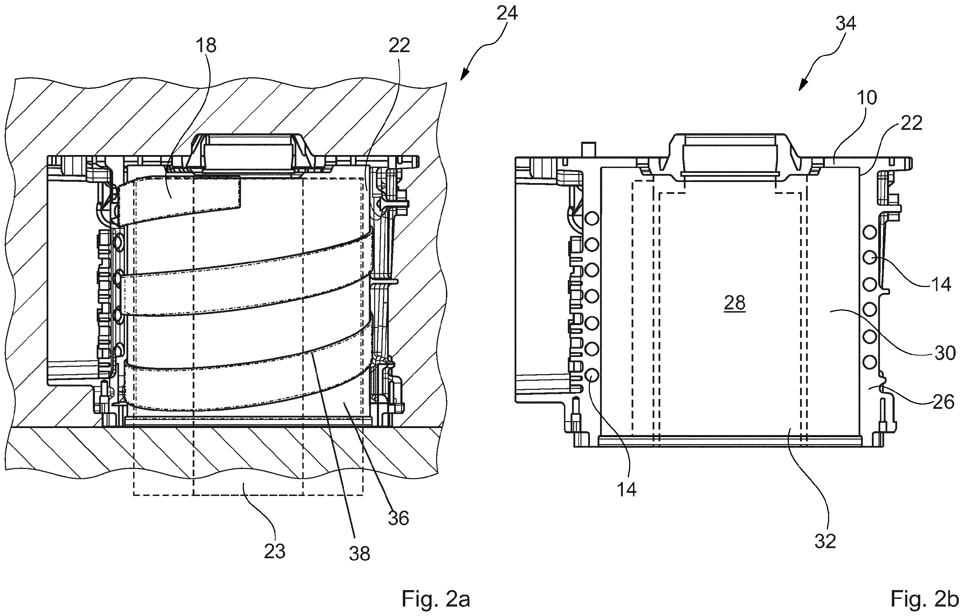

Figur 1a zeigt eine perspektivische Ansicht eines fertigen Gussteils 10, das im vorliegenden Fall ein Gehäuse eines Elektromotors ist. Das Gussteil 10 hat einen ersten Anschluss 12.1 und einen zweiten Anschluss 12.2, die mit einem in Figur 2b gezeigten Kanal 14, der im vorliegenden Fall ein Kühlkanal ist, im inneren des Gussteils 10 verbunden sind. Das Gussteil 10 kann, wie im vorliegenden Fall gezeigt, einen Montageflansch 16 zum Montieren an anderen Bestandteilen aufweisen.

Figur 1b zeigt ein Salzformteil 18 in einer schematisch eingezeichneten Salzformteil-Form 19, hier in Form einer Salzformteil-Gussform 20. Alternativ kann die Salzformteil-Form 19 auch eine Kernschießform sein, in die Salz oder eine Salzmischung, die vorzugsweise Wasserglas enthält, eingeschossen wird.

Das Salzformteil 18 wird hier durch Niederdruck-Kokillenguss hergestellt und besteht aus der folgenden Salzmischung: 62 ± 5% Na₂CO₃ und 38+5% KCl, insbesondere 62 ± 3% Na₂CO₃ und 38 ± 3% KCl. Alternativ kann beispielsweise auch eine Salzmischung aus 52,95 ± 5% Na₂CO₃ und 47,05 ± 5% KCl, insbesondere 52,95 ± 3% Na₂CO₃ und 47,05 ± 3% KCl gute Ergebnisse zeigen. Alle Prozentangaben sind in Gewichtsprozent.

Das Herstellen des Salzformteils 18 mittels Niederdruck-Kokillengusses erfolgt dadurch, dass zunächst eine, beispielsweise zweiteilige, Salzformteil-Gussform 20, insbesondere eine Kokillengussform, hergestellt wird. Die Die Kokillengussform ist vorzugsweise aus Warmarbeitsstahl hergestellt.

Die Salzformteil-Gussform 20 wird um einen Stützkörper 22 aufgebaut. Nach dem Herstellen der Kokillengussform 20 wird flüssiges Salz in die Kokillengussform 20 eingegossen.

Auf dem Stützkörper 22 ist das Salzformteil 18 hinreichend sicher gestützt, sodass es bewegt werden kann. Das Salzformteil 18 wird danach in eine Gussform 24 (siehe Figur 2a) transferiert, insbesondere in eine Spritzgussform. Die Spritzgussform ist vorzugsweise zweiteilig ausgebildet. Nach dem Schließen der Spritzgussform wird flüssiges Metall, im vorliegenden Fall eine Aluminiumlegierung, insbesondere eine untereutektische bis eutektische Aluminium-Silizium-Gusslegierung, in die Gussform eingebracht und erstarrt.

Figur 2a zeigt schematisch die Gussform 24 mit dem eingelegten Salzformteil 18 auf dem Stützkörper 22. Schematisch ist ein Faltkern 23 eingezeichnet, der den Stützkörper gegen ein Zusammendrücken sichert. In der Ausführungsform gemäß Figur 2a hat der Stützkörper einen rechteckigen Querschnitt, was unabhängig von anderen Merkmalen der Ausführungsform eine bevorzugte Ausführungsform darstellt.

Figur 2b zeigt einen Querschnitt durch ein fertiges Gussteil 10, das mittels eines Salzformteils hergestellt wurde, das einen runden Querschnitt hatte.. Es ist zu erkennen, dass der Stützkörper 22 durch das Angießen mit Metall fest mit einem Umguss 26 verbunden ist. Da der Stützkörper 22 vorzugsweise kein Gussteil ist, sondern beispielsweise stranggepresst wurde, ist er vorzugsweise lunkerfrei, sodass der Kanal 14, der im vorliegen Fall als Kühlkanal dient, sicher dicht relativ zu einem Innenraum 28 ist.

Im Innenraum 28 wurde in einem nachfolgenden Montageschritt ein Stator 30 montiert, der Elektromagnete trägt. Der Stator 30 ist drehfest mit dem Stützkörper 22 verbunden.

Besonders günstig ist es - ganz allgemein und unabhängig von den ansonsten in Bezug auf das vorliegende Ausführungsbeispiel beschriebenen Merkmalen - wenn der Stator 30 bereits vor dem Einlegen des Stützkörpers 22 und dem Salzformteil 18 in die Gussform 24 am Stützkörper 22 angeordnet wurde. Beispielsweise kann der Stator 30 so relativ zum Stützkörper 22 angeordnet werden, dass der Stator 30 vor dem Eingießen relativ zum Stützkörper 22 bewegbar ist und dass der Stator 30 durch das Umgießen des Stützkörpers 22 drehfest mit dem Stützkörper 22 verbunden wird.

Der Stator 30 steht im thermischen Kontakt mit dem Stützkörper 22. Der Stützkörper 22 besteht im vorliegenden Fall aus einer Aluminium-Knetlegierung. Der Umguss 26 besteht aus einer Aluminiumlegierung-Gusslegierung. Der Stützkörper 22 und der Umguss können aber auch aus der gleichen Aluminiumlegierung bestehen.

Danach wird ein Rotor 32 montiert, sodass ein Elektromotor 34 erhalten wird.

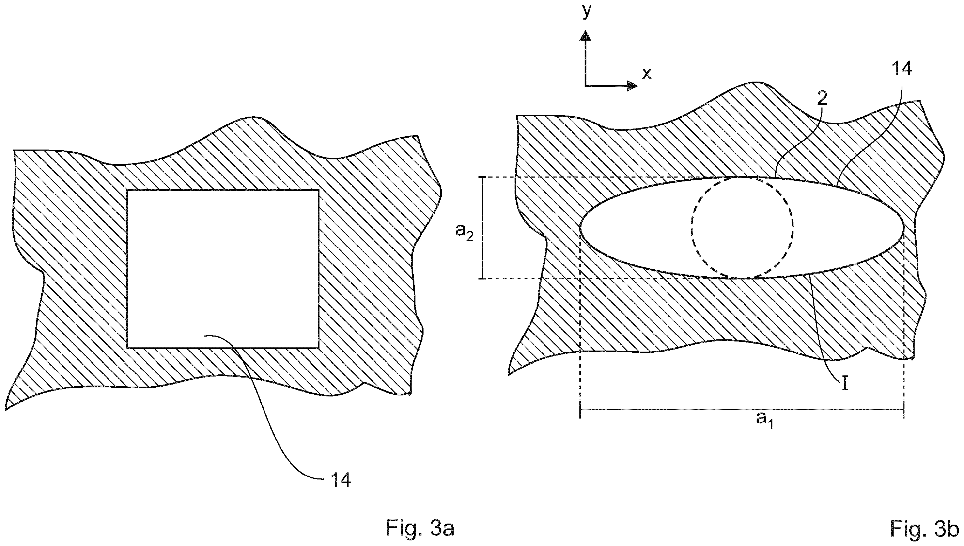

Figur 3a zeigt einen Querschnitt durch den Kanal 14. Es ist zu erkennen, dass der Kanal 14 einen nicht-runden Querschnitt haben kann. Im in Figur 4a gezeigten Fall ist der Querschnitt rechteckig.

Figur 3b zeigt einen weiteren möglichen Querschnitt des Kanals 14, der flach ausgebildet ist. Dabei ist eine erste Ausdehnung (a₁) in eine erste Richtung, die als x-Richtung bezeichnet werden kann, mehr als 1,5, im vorliegenden Fall mehr als doppelt so groß wie eine zweite Ausdehnung a₂ senkrecht zur X-Richtung, diese Richtung kann als Y-Richtung bezeichnet werden. Die erste Ausdehnung a₁ ist deutlich größer als ein Innenkreisdurchmesser D_{I} eines Innenkreises I des Querschnitts. Der Innenkreis I berührt einen Rand R des Kanals 14, schneidet ihn aber nicht.

Figur 2a zeigt zudem mit einer Strichpunktlinie schematisch eine Innenoberfläche 36 des Innen-Ausgleichszylinders. Der Innen-Ausgleichszylinder ist der gedachte Zylinder, der die Innenfläche des Stützkörpers 22 mit minimaler Quadratsumme der Abweichungen beschreibt. Eine Projektion des Salzformteils 18 auf die Innenoberfläche 36 ist ebenfalls mit einer Strichpunktlinie gezeichnet. Die Fläche der Projektion des Salzformteils auf die Innenoberfläche beträgt zumindest ein Zehntel, insbesondere zumindest ein Achtel, bevorzugt zumindest ein Sechstel, besonders bevorzugt zumindest ein Viertel, der Innenoberfläche. Auf diese Weise wird eine gute Kühlwirkung erreicht.

**Bezugszeichenliste**

| | | | |
|---|---|---|---|
| 10 | Gussteil, Gehäuse | 23 | Faltkern |
| 12 | Anschluss | 24 | Gussform |
| 14 | Kanal | 26 | Umguss |
| 16 | Montageflansch | 28 | Innenraum |
| 18 | Salzformteil | | |
| 19 | Salzformteil-Form | 30 | Stator |
| | | 32 | Rotor |
| 20 | Salzformteil-Gussform, Kokillen-gussform | 34 | Elektromotor |
| | | 36 | Innenoberfläche des Innen-Aus-gleichszylinders |
| 22 | Stützkörper | | |
| 38 | Projektion des Kanals 14 | | |
| a | Ausdehnung | | |
| R | Rand | | |
| L_{R} | Randlänge | | |
| D_{I} | Innenkreisdurchmesser | | |
| I | Innenkreis | | |

## Patentansprüche

1. Verfahren zum Herstellen eines Gehäuses (10), mit den Schritten:
(a) Herstellen eines Salzformteils (18), das die folgenden Schritte umfasst:
(i) Einbringen von Salz oder einer Salzmischung in eine Salzformteil-Form (19), die einen Stützkörper (22) umgibt, wobei das flüssige Salz oder die flüssige Salzmischung in Kontakt mit einem Stützkörper (22) kommt, und
(ii) Entformen des Salzformteils (18),
(b) Umgießen des Salzformteils (18) mit Metall, sodass ein Rohling entsteht,
(i) wobei das Salzformteil (18) beim Umgießen mittels eines Stützkörpers (22) gestützt wird und
(ii) der Stützkörper (22) durch das Angießen mit Metall fest mit einem Umguss (26) aus dem erstarrten Metall verbunden ist, und
(c) Herauslösen des Salzformteils (18) aus dem Rohling, sodass das Gussteil (10) entsteht.

2. Verfahren nach Anspruch 1, **dadurch gekennzeichnet, dass**
das Einbringen ein Gießen von flüssigem Salz oder einer flüssigen Salzmischung in eine Salzformteil-Gussform (20) ist.

3. Verfahren nach einem der vorstehenden Ansprüche, **dadurch gekennzeichnet, dass** das Einbringen von Salz oder einer Salzmischung in eine Salzformteil-Form (19) ein Kernschießen von Salz oder der Salzmischung in eine Kernschießform ist und/oder das Salz oder die Salzmischung Wasserglas enthält.

4. Verfahren nach einem der vorstehenden Ansprüche, **dadurch gekennzeichnet, dass** der Stützkörper zumindest abschnittsweise eine zylinderförmige Mantelfläche hat, insbesondere zumindest abschnittsweise rohrförmig ist.

5. Verfahren nach einem der vorstehenden Ansprüche, **dadurch gekennzeichnet, dass** das Salzformteil (18) den Stützkörper (22), insbesondere zumindest abschnittsweise spiralförmig, umgibt.

6. Verfahren nach einem der vorstehenden Ansprüche, **dadurch gekennzeichnet, dass** die Salzformteil-Gussform (20) eine Dauergussform (20) ist,

7. Verfahren nach einem der vorstehenden Ansprüche, **dadurch gekennzeichnet, dass**
(a) die Salzformteil-Gussform (20) den Stützkörper (22) umgibt oder enthält und
(b) die Salzformteil-Gussform (20) eine Negativstruktur des Salzformteils enthält.

8. Verfahren nach einem der vorstehenden Ansprüche, mit den Schritten:
(a) Positionieren zumindest eines Statorteils relativ zum Stützkörper (22), insbesondere Montieren des Statorteils am Stützkörper (22), und
(b) danach Umgießen des Stützkörpers (22) mit dem flüssigen Metall, sodass sich eine drehfeste Verbindung zwischen Statorteil und einem Umguss (26), der durch das Erstarren des flüssigen Metalls entsteht, ausbildet.

9. Verfahren nach einem der vorstehenden Ansprüche, **gekennzeichnet durch** den Schritt
Einbringen eines Rotors (32) in den Stützkörper (22), sodass ein Elektromotor erhalten wird.

10. Verfahren nach Anspruch 9, **gekennzeichnet durch** den Schritt Verbinden des Kanals mit einem ersten Anschluss (12) und einem zweiten Anschluss (12), sodass ein Fluid, insbesondere eine Flüssigkeit, durch den ersten Anschluss (12) in den Kanal (14) leitbar und mittels des zweiten Anschlusses aus dem Kanal (14) leitbar ist.

11. Gussteilherstellanlage zum Herstellen eines Gehäuses (10), mit:
(a) einer Salzformteil-Herstellmaschine zum Herstellen eines Salzformteils, die
(i) eine Salzformteil-Form (20) und
(ii) eine Einbringvorrichtung
zum Umgeben eines Stützkörpers und
zum Einbringen von Salz oder einer Salzmischung in die Salzformteil-Form (20), sodass das flüssige Salz oder die flüssige Salzmischung in Kontakt mit dem
Stützkörper (22) kommt, und
(iii) einer Entformvorrichtung zum Entformen des Salzformteils (18), sodass ein Vor-Rohling entsteht, aufweist,
(b) einer Spritzgussmaschine zum Umspritzen des Salzformteils (18) mit Metall, sodass ein Rohling entsteht, und
(c) einer Salzformteilentfernvorrichtung zum Herauslösen des Salzformteils, sodass das Gehäuse entsteht.

12. Gussteilherstellanlage nach Anspruch 1, **dadurch gekennzeichnet, dass** die Spritzgussmaschine eine Spritzgussform aufweist, die zum Umgeben (22) des Stützkörpers ausgebildet ist.

13. Gussteilherstellanlage nach Anspruch 12, **gekennzeichnet durch**
(a) eine erste Handhabungsvorrichtung zum Bewegen des Vor-Rohlings von der Salzformteil-Herstellmaschine zur Spritzgussmaschine und/oder
(b) eine Handhabungsvorrichtung zum Bewegen des Rohlings von der Spritzgussmaschine zur Salzformteilentfernvorrichtung.

## Claims

1. A method for producing a housing (10), comprising the steps:
(a) producing a salt moulded part (18), which comprises the following steps:
(i) introducing salt or a salt mixture into a salt moulded part mould (19) that encloses a support body (22), the liquid salt or liquid salt mixture coming into contact with a support body (22), and
(ii) de-moulding the salt moulded part (18),
(b) casting metal around the salt moulded part (18), resulting in a blank,
(i) the salt moulded part (18) being supported by means of a support body (22) during casting, and
(ii) the support body (22) being permanently joined to a casting (26) made of the solidified metal due to the casting with metal, and
(c) dissolving the salt moulded part (18) out of the blank, resulting in a cast part (10).

2. The method according to claim 1, **characterised in that**
the insertion is a pouring of liquid salt or a liquid salt mixture into a salt moulded part casting mould (20).

3. The method according to one of the preceding claims, **characterised in that** the insertion of salt or salt mixture into a salt moulded part mould (19) is a core shooting of salt or the salt mixture into a core-shooting mould and/or the salt or salt mixture contains soluble glass.

4. The method according to one of the preceding claims, **characterised in that** the support body has a cylindrical lateral surface, at least in sections, in particular is tubular, at least in sections.

5. The method according to one of the preceding claims, **characterised in that** the salt moulded part (18) encloses the support body (22), in particular in a spiral shape, at least in sections.

6. The method according to one of the preceding claims, **characterised in that** the salt moulded part is a permanent mould (20).

7. The method according to one of the preceding claims, **characterised in that**
(a) the salt moulded part casting mould (20) encloses or contains the support body (22) and
(b) the salt moulded part casting mould (20) contains a negative structure of the salt moulded part.

8. The method according to one of the preceding claims, comprising the steps:
(a) positioning at least one stator part relative to the support body (22), in particular mounting the stator part on the support body (22), and
(b) subsequently casting the liquid metal around the support body (22), resulting in a torque-proof connection between stator part and a casting (26) as a result of the solidification of the liquid metal.

9. The method according to one of the preceding claims, **characterised by** the step inserting a rotor (32) into the support body (22), thereby creating an electric motor.

10. The method according to claim 9, **characterised by** the step connecting the channel to a first connection (12) and a second connection (12) so that a fluid, especially a liquid, can be conducted through the first connection (12) into the channel (14) and out of the channel (14) by means of the second connection.

11. A cast part production system for producing a housing (10) with:
(a) a salt moulded part production machine for producing a salt moulded part that comprises
(i) a salt moulded part mould (20) and
(ii) an insertion device for
enclosing a support body and
introducing salt or a salt mixture into the salt moulded part mould (2) so that the liquid salt or liquid salt mixture comes into contact with a support body (22), and
(iii) a de-moulding device for de-moulding the salt moulded part (18), resulting in a pre-blank,
(b) an injection moulding machine for injection moulding metal around the salt moulded part (18), resulting in a blank, and
(c) a salt moulded part removal device for dissolving the salt moulded part, resulting in the housing.

12. The cast part production system according to claim 11, **characterised in that** the injection moulding machine comprises an injection mould configured to enclose the support body (22).

13. The cast part production system according to claim 12, **characterised by**
(a) a first handling device for moving the pre-blank from the salt moulded part production machine to the injection moulding machine and/or
(b) a handling device for moving the blank from the injection moulding machine to the salt moulded part removal device.

## Revendications

1. Procédé de fabrication d'un boîtier (10), comprenant les étapes consistant à :
(a) fabriquer une pièce moulée en sel (18), comprenant les étapes suivantes consistant à:
(i) introduire du sel ou un mélange de sels dans un moule (19) pour pièce moulée en sel, qui entoure un corps de soutien (22), le sel liquide ou le mélange de sels liquide venant en contact avec un corps de soutien (22), et
(ii) démouler la pièce moulée en sel (18),
(b) surmouler la pièce moulée en sel (18) avec du métal, de manière à obtenir une ébauche,
(i) la pièce moulée en sel (18) étant soutenue au moyen d'un corps de soutien (22) pendant le surmoulage, et
(ii) grâce au surmoulage avec du métal, le corps de soutien (22) étant solidaire d'une enveloppe coulée (26) en le métal solidifié, et
(c) extraire la pièce moulée en sel (18) hors de l'ébauche, de manière à obtenir la pièce coulée (10).

2. Procédé selon la revendication 1, **caractérisé en ce que** l'introduction est une coulée de sel liquide ou d'un mélange de sels liquide dans un moule de coulée (20) pour pièce moulée en sel.

3. Procédé selon l'une des revendications précédentes, **caractérisé en ce que**
l'introduction du sel ou d'un mélange de sels dans un moule (19) pour pièce moulée en sel est un noyautage du sel ou du mélange de sels dans un moule de noyautage, et/ou le sel ou le mélange de sels contient du verre soluble.

4. Procédé selon l'une des revendications précédentes, **caractérisé en ce que** le corps de soutien présente au moins localement une surface enveloppante cylindrique et, en particulier, est au moins localement tubulaire.

5. Procédé selon l'une des revendications précédentes, **caractérisé en ce que** la pièce moulée en sel (18) entoure le corps de soutien (22), en particulier au moins localement en forme de spirale.

6. Procédé selon l'une des revendications précédentes, **caractérisé en ce que** le moule de coulée (20) pour pièce moulée en sel est un moule de coulée continue (20).

7. Procédé selon l'une des revendications précédentes, **caractérisé en ce que**
(a) le moule de coulée (20) pour pièce moulée en sel entoure ou contient le corps de soutien (22), et
(b) le moule de coulée (20) pour pièce moulée en sel contient une structure négative de la pièce moulée en sel.

8. Procédé selon l'une des revendications précédentes, comprenant les étapes consistant à :
(a) positionner au moins une partie de stator par rapport au corps de soutien (22), en particulier monter la partie de stator sur le corps de soutien (22), et
(b) ensuite, surmouler le corps de soutien (22) avec le métal liquide, de manière à obtenir une liaison solidaire en rotation entre la partie de stator et une enveloppe coulée (26) résultant de la solidification du métal liquide.

9. Procédé selon l'une des revendications précédentes, **caractérisé par** l'étape consistant à
introduire un rotor (32) dans le corps de soutien (22), de manière à obtenir un moteur électrique.

10. Procédé selon la revendication 9, **caractérisé par** l'étape consistant à relier le canal à un premier raccord (12) et à un deuxième raccord (12), de manière à pouvoir acheminer un fluide, en particulier un liquide, jusque dans le canal (14) à travers le premier raccord (12) et hors du canal (14) au moyen du deuxième raccord (12).

11. Installation de fabrication de pièces coulées pour la fabrication d'un boîtier (10), comprenant :
(a) une machine de fabrication de pièces moulées en sel pour fabriquer une pièce moulée en sel, qui comprend
(i) un moule (20) pour pièce moulée en sel, et
(ii) un dispositif d'introduction pour entourer un corps de soutien et pour introduire du sel ou un mélange de sels dans le moule (20) pour pièce moulée en sel, de sorte que le sel liquide ou le mélange de sels liquide entre en contact avec un corps de soutien (22), et
(iii) un dispositif de démoulage pour démouler la pièce moulée en sel (18), de manière à obtenir une pré-ébauche,
(b) une machine de coulée par injection pour le surmoulage de la pièce moulée en sel (18) avec du métal, de manière à obtenir une ébauche, et
(c) un dispositif de retrait de pièce moulée en sel pour extraire la pièce moulée en sel, de manière à obtenir le boîtier.

12. Installation de fabrication de pièces coulées selon la revendication 11, **caractérisée en ce que** la machine de coulée par injection présente un moule de coulée par injection réalisé pour entourer (22) le corps de soutien.

13. Installation de fabrication de pièces coulées selon la revendication 12, **caractérisée par**
(a) un premier dispositif de manipulation pour déplacer la pré-ébauche de la machine de fabrication de pièces moulées en sel à la machine de coulée par injection, et/ou
(b) un dispositif de manipulation pour déplacer l'ébauche de la machine de coulée par injection au dispositif de retrait de pièce moulée en sel.
